# EUROPÄISCHE PATENTSCHRIFT

(11) **EP 1 589 278 B1**
(45) Veröffentlichungstag und Bekanntmachung des Hinweises auf die Patenterteilung: **29.05.2013**
(21) Anmeldenummer: 05008519.0
(22) Anmeldetag: 19.04.2005
(51) Int. Cl.: F16P 1/00, F16P 1/06, B23K 26/08, B23K 26/12

(54) **Drehtisch und Verfahren**
Rotary table and method
Table rotative et procédé

(30) Priorität: 19.04.2004 DE 102004019384
(43) Veröffentlichungstag der Anmeldung: 26.10.2005
(73) Patentinhaber: Robot Technology GmbH, 63801 Kleinostheim (DE)
(72) Erfinder: Maier, Stefan, 63768 Hösbach (DE); Wechs, Thomas, 63911 Klingenberg (DE)
(74) Vertreter: Thürer, Andreas

(56) Entgegenhaltungen:
- US-A- 4 205 216
- US-A- 5 591 361
- US-A- 6 147 323
- US-B1- 6 314 686

## Beschreibung

Die Erfindung betrifft einen Drehtisch mit zumindest zwei Arbeitssektoren, wobei zumindest einer der Arbeitssektoren in einer Drehstellung des Drehtisches einem einzugrenzenden Raumbereich für eine einzugrenzende Arbeit und mittels Drehung des Drehtisches in eine weitere Drehstellung einem abzuschirmenden Raumbereich für eine abzuschirmende Arbeit zuzuwenden ist, und wobei zumindest während der Durchführung der einzugrenzenden Arbeit der abzuschirmende Raumbereich von dem einzugrenzenden Raumbereich zumindest teilweise abzuschirmen ist, sowie ein Verfahren zur Einrichtung von abgeschirmten Arbeitspositionen.

Ein Drehtisch der genannten Gattung ist aus der US 6,314,686, der US 6,147,323 oder der US 4,205,216 bekannt.

Drehtische werden zur Bearbeitung und zum Weitertransport von Arbeitsvorrichtungen verwendet. Zur Bearbeitung von Werkstücken in den Arbeitsvorrichtungen stoppt der Drehtisch und vorzugsweise mehrere Werkstücke werden auf eine Drehtischplatte in Arbeitsvorrichtungen gelegt. Die Werkstücke werden in einem Arbeitssektor in einem einzugrenzenden Raumbereich zur Durchführung von ungefährlichen Arbeiten bearbeitet und/oder für Arbeiten in einem abzuschirmenden Raumbereich vorbereitet. Durch Drehung des Drehtisches wird ein Arbeitssektor aus dem einzugrenzenden Raumbereich in den anderen, abzuschirmenden Raumbereich überführt, so dass in dem abzuschirmenden Raumbereich weiterführende Arbeiten, beispielweise Bearbeitungen mit Laserrobotern, vorgenommen werden können.

Bekannt sind Drehtische, die zum Durchführen von gefährlichen Arbeiten, insbesondere bei gefährdenden Arbeiten, die Strahlenschutz benötigen, nach der Drehung durch eine herabsenkbare Trennwand in die zwei Arbeitssektoren unterteilt werden können. Der eine Arbeitssektor dient der Arbeitsvorbereitung und wird von dem anderen Arbeitssektor, in dem eine abzuschirmende Arbeit durchgeführt wird, getrennt.

Als nachteilig erweist es sich, dass die sichere Abdichtung der Arbeitsplätze gegeneinander sehr aufwendig bzw. nicht in ausreichendem Maße durchzuführen ist. Zudem ist der Absenkvorgang der Trennwand verhältnismäßig langsam und muss durch spezielle Sensoren sehr genau überwacht werden, um eine ausreichende Dichtung sicherzustellen.

Die Aufgabe der vorliegenden Erfindung ist es, einen Drehtisch bereitzustellen, der es ermöglicht, Arbeitsplätze an Drehtischen schnell und sehr sicher gegeneinander abzuschirmen.

Die Aufgabe wird erfindungsgemäß durch die Merkmale des Anspruchs 1 gelöst.

In einem ersten insbesondere manuellen Vorarbeitsbereich werden beispielsweise Arbeitsvorgänge für den zweiten Arbeitsbereich vorbereitet. Im zweiten Arbeitsbereich werden dann vorzugsweise automatisierte oder halbautomatisierte Arbeitsvorgänge, beispielsweise unter dem Einsatz von Laserstrahlen mittels Robotern, durchgeführt. Diese Raumbereiche mit teilweise gefährdenden Arbeiten werden erfindungsgemäß gegen ein Austreten der gefährdenden Strahlung, von Gasen oder Staub mittels eines bezüglich des Drehtisches im wesentlichen mitdrehenden Abschirmpartners gegen einen bezüglich des Drehtisches im wesentlichen feststehenden Abschirmpartner so gedreht, dass eine Abschirm-Drehstellung entsteht, in der beide Abschirmpartner zusammenwirken. Ein Übergangsbereich zwischen den Abschirmpartnern wird durch eine Dichtung, die vorzugsweise gegen einen Drehmittelpunkt des Drehtisches keilförmig zuläuft, sicher, zuverlässig und reproduzierbar abgedichtet. Die Dichtung und Abschirmung geschieht in einem Arbeitsschritt mit der Drehung der Drehscheibe, wodurch eine wesentliche Taktzeitverkürzung erreicht wird, da das Auffahren eines Abschirmpartners in Form eines Hubtores oder ähnliches über Nocken oder eine zusätzliche Pneumatikregelung entfällt.

Es werden somit keine weiteren mechanischen Bauteile benötigt, die zusätzlich über die Drehung des mitdrehenden Abschirmpartners um die Drehachse hinaus verfahren werden müssten. Hierdurch wird einerseits der sichere Endzustand schneller erreicht. Die Anlage ist darüberhinaus wartungsärmer und zuverlässiger. Die Störanfälligkeit ist reduziert. Eine komplette Strahlungsdichtheit kann gewährleistet werden.

Ein großer Drehwinkel und zugleich eine ausreichende Stabilität und eine gute Dichtung wird erreicht, da der mitdrehende Abschirmpartner im Bereich der Drehachse dünner als in Randbereichen ist.

Vorteilhaft ist es, wenn der feststehende Abschirmpartner zumindest teilweise durch umliegende Wandbereiche, insbesondere in Form einer Kabine gebildet ist. Hierdurch ist es möglich, eine sichere und zugleich einfache Abschirmung unter Einhaltung für die jeweilige einzugrenzende Arbeitsart vorgegebener Strahlungsnormen zu gewährleisten.

Eine zuverlässige, allseitige Dichtung ist gegeben, wenn der feststehende Abschirmpartner in Abschirmstellung im wesentlichen ein den mitdrehenden Abschirmpartner umgebender Abschirmbereich ist.

Eine dauerhafte, stabile Abschirmung des abzuschirmenden Arbeitsbereichs liegt vor, wenn der mitdrehende Abschirmpartner eine an einer Drehtischplatte zwischen den zwei Raumbereichen befestigte, im wesentlichen durchgehende Trennwand ist. Die Trennwand zwischen zwei Raumbereichen kann fest und abgedichtet an der drehbaren Drehtischplatte eingebaut werden und somit auch mit allen notwendigen Sicherheitseinrichtungen versehen sein, ohne dass eine Vorrichtung zum Bewegen der Trennwand sowie eine zusätzliche Sensoreinheit vorgesehen sein müsste, die Taktzeitverlängerungen oder die Gefahr eventueller Undichtigkeiten mit sich bringen würden.

Die Stabilität und Flexibilität des Aufbaus ist weiter erhöht, wenn ein Abschirmpartner jeweils einstückig oder mehrstückig ist. Der Aufbau einer derartigen Abschirmvorrichtung ist vereinfacht, wenn an zwei Seiten der Drehtischachse jeweils ein Teil des mitdrehenden Abschirmpartners insbesondere mit einer weiteren Abschirmung für den Drehachsenbereich vorgesehen ist. Zudem ist im Wartungsfall ein Abbau eines einzelnen Teils leichter möglich, was Kosten und Zeit erspart.

Eine insbesondere gegenüber Laserstrahlung sehr sichere Abschirmvorrichtung ist gewährleistet, wenn der mitdrehende Abschirmpartner zumindest teilweise höher ist, als auf der Drehtischplatte in den Arbeitssektoren vorgesehene Arbeitsvorrichtungen. Die Arbeitsvorrichtungen können zudem während der Drehung des Drehtisches in ihrer Einbauposition und Höhe verbleiben, was weitere Arbeitszeit- und Taktzeitverkürzungen ermöglicht.

Eine zuverlässige Abdichtung ist gegeben, wenn die Drehachse von einen abgeschirmten Drehzylinder umgeben ist, der auf dem Drehtisch angebracht und an dem der mitdrehende Abschirmpartner befestigt ist.

Für eine Absicherung gegen einen Durchtritt von Partikeln oder Strahlung ist der Übergangsbereich eine Trennfuge und/oder besteht zumindest teilweise ein direkter Kontakt zwischen den Abschirmpartnern .

Eine Nutzung der Drehbewegung für die Dichtung wird erreicht, wenn ein Abschirmpartner eine im wesentlichen an Bereichen mit einer entsprechenden Nähe zu dem anderen Abschirmpartner umlaufende Dichtung aufweist, die durch die Drehung des Drehtisches in den korrespondierenden Übergangsbereich zum anderen Abschirmpartner lückenlos dichtend einzuführen ist. Es werden keine zusätzlichen Dichtigkeitssensoren benötigt, um festzustellen, ob nach Abschluss der Drehung eine ausreichende Dichtung erzielt wird.

Eine einfache Herstellung der Dichtwirkung bei zugleich geringem Verschleiß oder Wartungsaufwand liegt vor, wenn die Dichtung bezüglich der Drehrichtung keilförmig ausgebildet ist, d.h. gegen einen Drehmittelpunkt des Drehtisches keilförmig zuläuft. Durch die Drehung des Drehtisches wird in einer Bewegung die Dichtung in den Übergangsbereich sicher abdichtend zwischen den beiden Abschirmpartnern eingebracht. Als Material können sehr unterschiedliche Materialien eingesetz werden, je nach Anwendung, beispielsweise sehr elastische, um auch bei geringen Drehkräften eine gute Abdichtung zu erzielen oder festere, haltbarere Materialien, um auch bei sehr hohen Taktzahlen noch zuverlässig zu dichten und nicht zu verschleißen. Auf einfache Weise kann somit eine Dichtung gegen das Austreten von Strahlung, insbesondere Laserstrahlung erreicht werden.

Der Drehtisch liefert eine strahlen-, licht- und staubdichte Absicherung des abzuschirmenden Arbeitssektors, wenn die Dichtung bezüglich einer Vor- und einer Rück-Drehrichtung keilförmig ausgebildet ist, d.h. gegen einen Drehmittelpunkt des Drehtisches keilförmig zuläuft, und in beiden Drehrichtungen abdichtet, wobei die Dichtung an dem mitdrehenden und/oder dem feststeheden Abschirmpartner angebracht ist.

Vorteilhaft ist es, wenn in dem abzuschirmenden Raumbereich in einem Arbeitssektor des Drehtisches eine vorzugsweise automatisierte Vorrichtung zum Laserbehandeln, insbesondere zum Laserschweißen, vorgesehen ist und durch die Abschirmpartner in Abschirmstellung gegenüber dem anderen einzugrenzenden Raumbereich abgeschirmt ist. Auf diese Weise können die hohen Sicherheitsanforderungen bezüglich einer vollständigen Abdichtung gegen ein Austreten von Laserstrahlung auf einfache Weise sicher und zuverlässig erfüllt werden. Insbesondere eine Keildichtung ermöglicht es, selbst höchste Sicherheitsstandards einzuhalten, ohne beispielsweise zusätzliche, eventuell störanfällige Sensoren einbringen zu müssen, die ein vollständiges Herabsenken eines Hubtores überwachen.

Die Aufgabe wird auch erfindungsgemäß durch ein Verfahren zur Einrichtung von abgeschirmten Arbeitspositionen gelöst, wobei ein Drehtisch mit zumindest zwei Arbeitssektoren von einer Arbeitsposition in eine andere Arbeitsposition überführt wird, wobei zumindest während der Durchführung einer einzugrenzenden Arbeit ein entsprechender abzuschirmender Raumbereich von einem einzugrenzenden Raumbereich zumindest teilweise abgeschirmt wird, insbesondere unter Verwendung eines oben beschriebenen Drehtischs, wobei ein bezüglich des Drehtisches im wesentlichen feststehender Abschirmpartner und ein mit dem Drehtisch im wesentlichen mitdrehender Abschirmpartner durch die Drehung in eine resultierende Abschirm-Drehstellung durch die Relativstellung beider Abschirmpartner zueinander überführt wird, wodurch ein Übergangsbereich zwischen den Abschirmpartnern hinsichtlich von Dichtungsanforderungen der einzugrenzenden Arbeitsart im wesentlichen lückenlos abgedichtet wird.

Weitere Merkmale und Vorteile der Erfindung ergeben sich aus den Ansprüchen und der nachstehenden Beschreibung, in der ein Ausführungsbeispiel des Gegenstands der Erfindung in Verbindung mit der Zeichnung näher erläutert ist; es zeigen
Fig. 1 einen Drehtisch mit einer Abschirmung,
Fig. 2 zwei verschiedene Drehtischstellungen und
Fig. 3 eine Überlagerung aus zwei Drehtischstellungen.

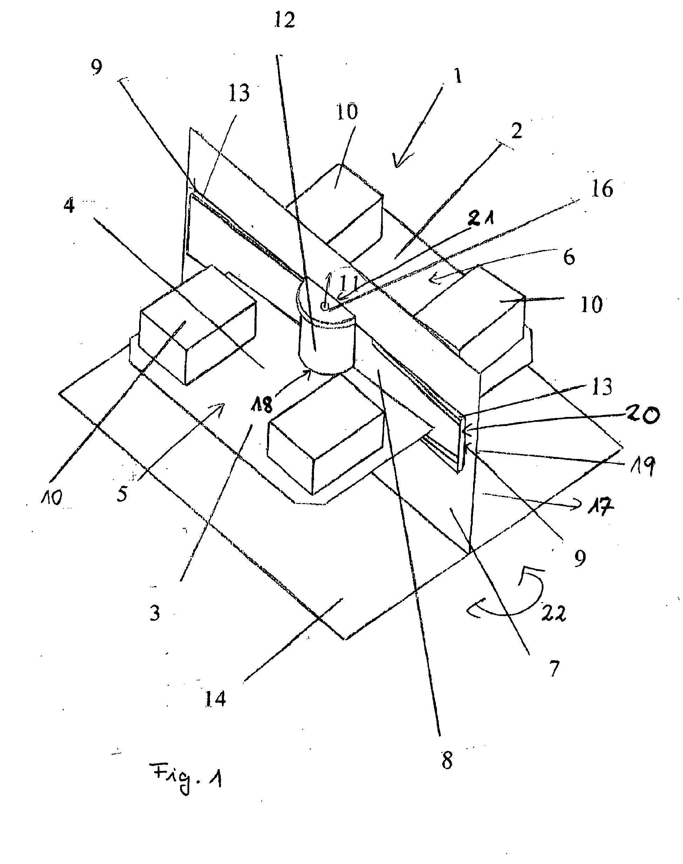

Fig. 1 zeigt einen Drehtisch 1 mit einer Abschirmung. Der Drehtisch 1 weist eine sich um eine Drehtischachse 11 drehende Drehtischplatte 4 auf. Die vorgenannte Drehtischplatte 4 kann beispielsweise aus einer geschlossenen oder ringförmigen Scheibe aufgebaut sein. Auf der Drehtischplatte 4 befinden sich beispielhaft dargestellt vier Arbeitsvorrichtungen 10, jeweils zwei in einem Arbeitssektor 2, 3. Diese Arbeitssektoren 2,3 sind durch die Abschirmung voneinander getrennt. Die Abschirmung besteht in diesem Fall aus einem feststehenden Abschirmpartner 7 in Form einer Wand, die auf einem Boden 14 steht und die eine fensterartige, im wesentlichen rechteckige Öffnung 20 aufweist. Der andere wesentliche Teil der Abschirmung besteht aus einem sich mit der Drehtischplatte 4 mitdrehendem Abschirmpartner 8, der zwischen den Arbeitssektoren 2, 3 angeordnet ist, und dessen Zentrum mit der Drehachse 11 der Drehtischplatte 4 übereinstimmt, wobei weiterhin die Drehtischachse 11 entlang eines Mittenbereichs 21 der fensterartigen Öffnung 20 in der Wandebene verläuft. Durch Drehung der Drehtischplatte 4 werden die Arbeitsvorrichtungen eines Arbeitssektors von einem Raumbereich in einen anderen Raumbereich überführt.

Es kann sich dabei um zwei unterschiedliche, voneinander getrennte Arbeitssektoren handeln, wie in den Figuren dargestellt. Es ist aber auch eine größere Anzahl Arbeitssektoren und entsprechend eine größere Anzahl Raumbereiche möglich, beispielsweise vier, wobei insbesondere jeweils benachbart zu einem einzugrenzenden Raumbereich 5 ein abzuschirmender Raumbereich 6 angeordnet ist. In einem einzugrenzenden Raumbereich 5 werden Arbeiten durchgeführt, von denen Gefahren beispielsweise für benachbarte Personen ausgehen können, insbesondere Personen, die Arbeiten in einem abzuschirmenden Raumbereich 6 an auf der Drehtischplatte 4 gelagerten Arbeitsvorrichtungen 10 durchführen. Zwischen diesen Raumbereichen 5,6 ist durch die vorliegende Erfindung in jedem Fall eine sehr sichere, zuverlässige und leicht durch die Drehung des Drehtisches 1 herzustellende Abschirmung gegeben.

Die Drehung erfolgt im dargestellten Fall von zwei unterschiedlichen Raumbereichen nicht um 360 °, sondern jeweils vorwärts um einen Drehwinkel 15 der Drehachse 11 von annähernd 178° und um einen entsprechenden Drehwinkel 15 wieder zurück. Somit ergibt sich eine leichte Versetzung der Positionen der Arbeitsvorrichtungen 10 in einem Raumbereich gegenüber den entsprechenden des anderen Raumbereichs. Dabei kann vorbestimmt ausgewählt werden, in welchem Raumbereich eine wiederholbar gleiche Position eingenommen wird und in welchem Raumbereich die Arbeitsposition um einen kleinen Winkel versetzt werden kann.

Zur Herstellung einer sicheren Abschirmung wird der mitdrehende Abschirmpartner 8 so in den feststehenden Abschirmpartner 7 gedreht, dass sich die Abschirmpartner nahezu in einer Ebene befinden. Der mitdrehende Abschirmpartner 8, auch als Schwert bezeichnet, ist so hoch wie oder etwas höher als die höchste Arbeitsvorrichtung 10, die in einem der Arbeitssektoren 2, 3 eingerichtet ist. Dabei ist in einem Übergangsbereich 9 zwischen den Abschirmpartnern 7,8 eine Dichtung vorgesehen, die durch die Drehung in eine Kontaktstellung zwischen den beiden Abschirmpartnern 7, 8 gebracht wird. Diese Dichtung ist insbesondere umlaufend um den Rand des mitdrehenden Abschirmpartners 8 am mitdrehenden Abschirmpartner 8 und/oder am feststehenden Abschirmpartner 7 befestigt und vorzugsweise keilförmig bezüglich der Drehrichtung 22 ausgebildet.

Weitere Maßnahmen zur vollständigen Abdichtung der Abschirmpartner gegeneinander ist ein sich im mittleren Bereich des Drehtisches 1 befindendes mitdrehendes, zylindrisches Bauteil, das an entsprechende Flügel des mitdrehenden Abschirmpartners 8 anschließt und als Achsenabschirmung 12 dient und eine Abdeckung 16 aufweist.

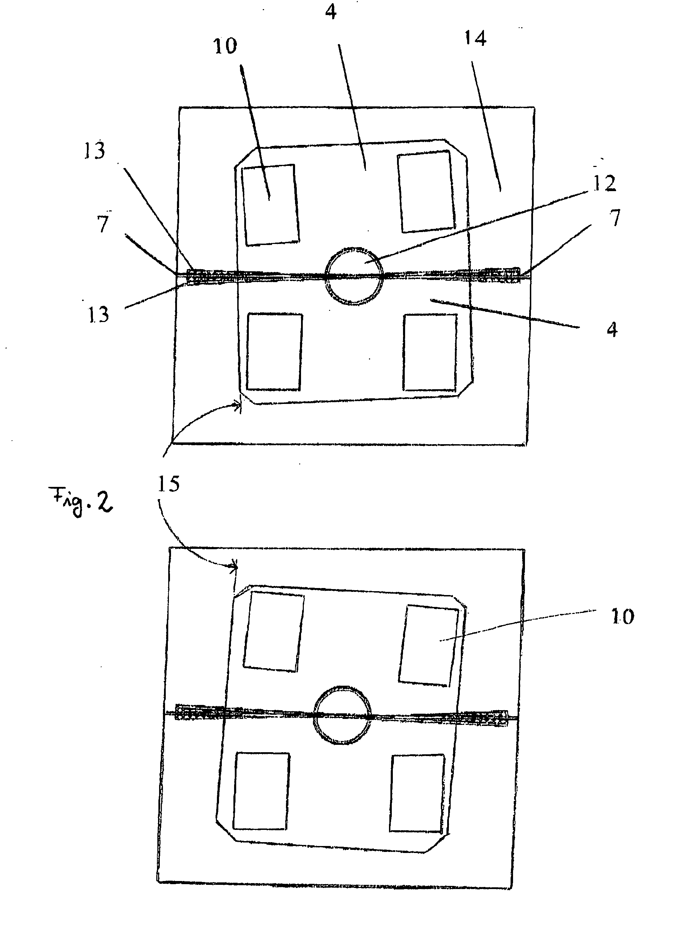

Fig. 2 zeigt zwei verschiedene Drehtischstellungen. Der Drehtisch 1 wird zwischen den zwei Drehtischendstellungen der Arbeitssektoren 2, 3 in bezug auf den abzuschirmenden Raumbereich 6 und einen einzugrenzenden Raumbereich 5 bis etwa 175° bis 179°, vorzugsweise etwa 178° gedreht. Der mitdrehende Abschirmpartner 8 ist im oberen Bereich, beispielsweise zur Abdichtung einer den einzugrenzenden Raumbereich umgebenden, abgeschirmten Kabine zur Abschirmung des einzugrenzenden Raumbereichs 5, sehr dünn aufgebaut, damit ein möglichst großer Drehwinkel erreicht werden kann. Durch die erfindungsgemässe Drehung um 175 bis zu 178,5° kann eine beidseitige Andockung des mitdrehenden Abschirmpartners an die Kabine gewährleistet werden. Im mittleren Bereich wird das Maß des mitdrehenden Abschirmpartners sehr gering, wobei der feste Abschirmpartner und der mitdrehende Abschirmpartner in diesem Bereich sich gegenseitig überlappen.

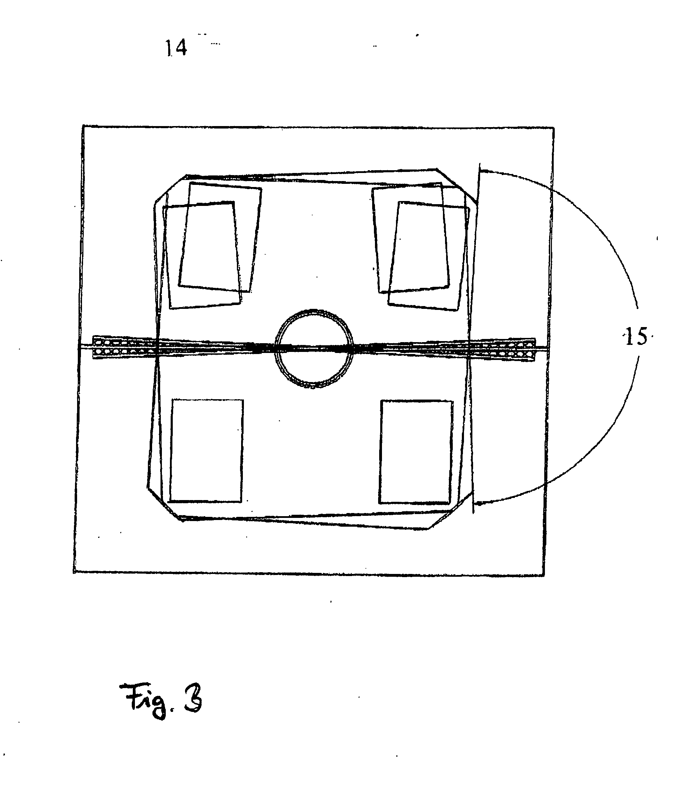

Fig. 3 zeigt eine Überlagerung aus zwei Drehtischstellungen. Hierbei wird der geringe Winkelversatz zwischen zwei Arbeitssektoren in unterschiedlichen Raumbereichen deutlich. Vorzugsweise wird ein Raumbereich für einen Versatz ausgewählt, in dem eine flexibel einstellbare und nachführbare Bearbeitungsvorrichtung vorgesehen ist.

### BEZUGSZEICHENLISTE

- 1: Drehtisch
- 2: Arbeitssektor
- 3: Arbeitssektor
- 4: Drehtischplatte
- 5: einzugrenzender Raumbereich
- 6: abzuschirmender Raumbereich
- 7: feststehender Abschirmpartner
- 8: mitdrehender Abschirmpartner
- 9: Übergangsbereich
- 10: Vorrichtung
- 11: Drehtischachse
- 12: Achsenabschirmung
- 13: Dichtung
- 14: Boden
- 15: Drehwinkel
- 16: Abdeckung
- 17: Wandbereiche
- 18: Bereich der Drehachse
- 19: Randbereich
- 20: Öffnung
- 21: Mittenbereich
- 22: Drehrichtung

## Patentansprüche

1. Drehtisch (1) mit zumindest zwei Arbeitssektoren (2, 3), wobei zumindest einer der Arbeitssektoren (2, 3) in einer Drehstellung des Drehtisches (1) einem einzugrenzenden Raumbereich (5) für eine einzugrenzende Arbeit und mittels Drehung des Drehtisches (1) in eine weitere Drehstellung einem abzuschirmenden Raumbereich (6) für eine abzuschirmende Arbeit zuzuwenden ist,
und wobei zumindest während der Durchführung der einzugrenzenden Arbeit der abzuschirmende Raumbereich (6) von dem einzugrenzenden Raumbereich (5) zumindest teilweise abzuschirmen ist, wobei
ein bezüglich des Drehtisches (1) im wesentlichen feststehender Abschirmpartner (7) und ein mit dem Drehtisch (1) im wesentlichen mitdrehender Abschirmpartner (8) vorgesehen sind, wobei in einer Abschirm-Drehstellung durch die Relativstellung beider Abschirmpartner (7, 8) zueinander die Abschirmung resultiert und ein Übergangsbereich (9) zwischen den Abschirmpartnern (7, 8) hinsichtlich von Dichtungsantorderungen der einzugrenzenden Arbeitsart im wesentlichen lückenlos dicht ist, **dadurch gekennzeichnet, dass**
der mitdrehende Abschirmpartner (8) im Bereich (18) der Drehachse (11) dünner als in Randbereichen (19) ist
und die Dicke zum Rand hin kontinuierlich zunimmt,
wobei durch die Drehung des mitdrehenden Abschirmpartners um 175 bis zu 178,5° eine beidseitige Andockung des mitdrehenden Abachirmpartners an den feststehenden Abschirmpartner gewährleistet werden kann.

2. Drehtisch nach Anspruch 1, **dadurch gekennzeichnet, dass** der feststehende Abschirmpartner (7) zumindest teilweise durch umliegende Wandbereiche (17), insbesondere in Form einer Kabine, gebildet ist.

3. Drehtisch nach einem der Ansprüche 1 oder 2, **dadurch gekennzeichnet, dass** der feststehende Abschirmpartner (7) in Abschirmstellung im wesentlichen ein den mitdrehenden Abschirmpartner (8) umgebender Abschirmbereich ist.

4. Drehtisch nach einem der Ansprüche 1 bis 3, **dadurch gekennzeichnet, dass** der mitdrehende Abschirmpartner (8) eine an einer Drehtischplatte (4) zwischen den zwei Raumbereichen (5, 6) befestigte, im wesentlichen durchgehende Trennwand ist.

5. Drehtisch nach Anspruch 1 bis 4, **dadurch gekennzeichnet, dass** ein Abschirmpartner (7, 8) einstückig oder mehrstückig aufgebaut ist.

6. Drehtisch nach einem der Ansprüche 1 bis 5, **dadurch gekennzeichnet, dass** der mitdrehende Abschirmpartner (8) zumindest teilweise höher ist, als auf der Drehtischplatte (4) in den Arbeitssektoren (2, 3) vorgesehene Arbeitsvorrichtungen (10).

7. Drehtisch nach einem der Ansprüche 1 bis 6, **dadurch gekennzeichnet, dass** eine Drehachse (11) des mitdrehenden Abschirmpartners (8) einem Drehzentrum der Drehtischplatte (4) entspricht.

8. Drehtisch nach einem der Ansprüche 1 bis 7, **dadurch gekennzeichnet, dass**
die Drehachse (11) von einen abgeschirmten Drehzylinder (12) umgeben ist, der auf dem Drehtisch (4) angebracht und an dem der mitdrehende Abschirmpartner (8) befestigt ist.

9. Drehtisch nach einem der Ansprüche 1 bis 8, **dadurch gekennzeichnet, dass** der Übergangsbereich (9) eine Trennfuge ist und/oder zumindest teilweise ein direkter Kontakt zwischen den Abschirmpartnern (7, 8) besteht. 9

10. Drehtisch nach einem der Ansprüche 1 bis 9, **dadurch gekennzeichnet, dass** ein Abschirmpartner eine im wesentlichen an Bereichen mit einer entsprechenden Nähe zu dem anderen Abschirmpartner umlaufende Dichtung (13) aufweist, die durch die Drehung des Drehtisches (1) in den korrespondierenden Übergangsbereich (9) zum anderen Abschirmpartner lückenlos dichtend einzuführen ist.

11. Drehtisch nach Anspruch 10**, dadurch gekennzeichnet, dass** die Dichtung (13) bezüglich der Drehrichtung (22) keilförmig ausgebildet ist, d.h. gegen einen Drehmittelpunkt des Drehtisches keilförmig zuläuft.

12. Drehtisch nach einem der Ansprüche 10 oder 11, **dadurch gekennzeichnet, dass** die Dichtung (13) bezüglich einer Vor- und einer Rück-Drehrichtung keilförmig ausgebildet ist, d.h. gegen einen Drehmittelpunkt des Drehtisches keilförmig zuläuft, und in beiden Drehrichtungen (22) abdichtet.

13. Drehtisch nach einem der Ansprüche 1 bi 12, **dadurch gekennzeichnet, dass** in dem abzuschirmenden Raumbereich (6) in einem Arbeitssektor des Drehtisches (1) eine vorzugsweise automatisierte Vorrichtung zum Laserbehandeln, insbesondere zum Laserschweißen, vorgesehen ist und durch die Abschirmpartnern in Abschirmstellung gegenüber dem einzugrenzenden Raumbereich (7) abgeschirmt ist.

14. Verfahren zur Einrichtung von abgeschirmten Arbeitspositionen, wobei ein Drehtisch mit zumindest zwei Arbeitssektoren (2, 3) von einer Arbeitsposition in eine andere Arbeitsposition überführt wird, wobei zumindest während der Durchführung einer einzugrenzenden Arbeit ein entsprechender abzuschirmender Raumbereich (6)
von einem einzugrenzenden Raumbereich (5) zumindest teitweise abgeschirmt wird, unter Verwendung eines Drehtischs nach Anspruch 1 bis 13, **dadurch gekennzeichnet, dass** ein bezüglich des Drehtisches im wesentlichen feststehender Abschirmpartner (7) und ein mit dem Drehtisch im wesentlichen mitdrehender Abschirmpartner (8) durch die Drehung in eine resultierende Abschirm-Drehstellung durch die Relativstellung beider Abschirmpartner zueinander überführt wird, wodurch ein Übergangsbereich (9) zwischen den Abschirmpartnern hinsichtlich von Dichtungsanforderungen der einzugrenzenden Arbeitsart im wesentlichen lückenlos abgedichtet wird.

## Claims

1. Turntable (1) with at least two working sectors (2, 3), whereby at least one of the working sectors (2, 3) in one rotational position of the turntable (1) is to be facing towards a confined room area (5) for work which is to be confined, and whereby, through rotating the turntable (1) to another rotational position, it is to be facing towards a screened room area (6) for work which is to be screened. While the contained work is being performed, the screened room area (6) is to be screened at least partially from the contained room area (5), and this is **characterised by** the provision of an essentially fixed screen section (7) as regards the turntable (1), and of a screen section (8) which essentially revolves with the turntable (1), whereby the screening results in the screen rotational position from the relative position of both screen sections (7, 8) to each other. A transition area (9) between the screen sections (7, 8) is formed, which is essentially closed tight seamlessly, whereby the revolving screen section (8) is thinner in the area (18) of the rotational axis (11) than in the areas of its edges (19). The thickness to the edge increases continually, thus ensuring that, through turning the revolving screen section by between 175 and 178.5 °, the docking of the revolving screen section on both sides against the fixed screen section can be achieved.

2. Turntable in accordance with Claim 1, **characterised by** the fact that the fixed screen section (7) is formed at least partially through surrounding wall areas (17), in particular in the form of a cabin.

3. Turntable in accordance with one of the Claims 1 or 2, **characterised by the fact** that the fixed screen section (7) in screen position is essentially a screen area, which surrounds the revolving screen section (8).

4. Turntable in accordance with one of the Claims 1 to 3, **characterised by the fact** that the revolving screen section (8) is essentially a continuous partition wall, which is fastened to a turntable plate (4) between the two room areas (5, 6).

5. Turntable in accordance with one of the Claims 1 to 4, **characterised by the fact** that a screen section (7, 8) is constructed as one piece or several pieces.

6. Turntable in accordance with one of the Claims 1 to 5, **characterised by the fact** that the revolving screen section (8) is at least partially higher than the working devices (10), which are provided on the turntable plate (4) in the working sectors (2, 3).

7. Turntable in accordance with one of the Claims 1 to 6, **characterised by the fact** that a rotational axis (11) of the revolving screen section (8) corresponds to a rotational centre of the turntable plate (4).

8. Turntable in accordance with one of the Claims 1 to 7, **characterised by the fact** that the rotational axis (11) is surrounded by a screened rotational cylinder (12), which is attached on the turntable plate (4) and to which the revolving screen section (8) is fastened.

9. Turntable in accordance with one of the Claims 1 to 8, **characterised by the fact** that the transition area (9) is a partition joint and/or that there is at least partially a direct contact between the screen sections (7, 8).

10. Turntable in accordance with one of the Claims 1 to 9, **characterised by the fact** that one screen section has essentially an all-round seal (13) at areas with a corresponding proximity to the other screen section, and that by turning the turntable (1), this seal is inserted into the corresponding transition area (9) to the other screen section, closing it tight seamlessly.

11. Turntable in accordance with Claim 10, **characterised by the fact** that the seal (13) in regard to the rotational direction (22) is designed in a conical shape, i.e. it runs up conically against a rotational centre point of the turntable.

12. Turntable in accordance with one of the Claims 1 to 10 or 11, **characterised by the fact** that the seal (13) in regard to a forwards and backwards rotational direction is designed in a conical shape, and that it is closed tight in both rotational directions (22).

13. Turntable in accordance with one of the Claims 1 to 12, **characterised by the** fact that a preferably automated device for laser treatment, particularly for laser welding, is provided in the screened room area (6) in one working sector of the turntable (1), and that the device is screened from the contained room area (7) by means of the screen section in screen position.

14. Process for setting up screened working positions, whereby a turntable with at least two working positions (2, 3) is transferred from one working position to another working position, and whereby, while the contained work is being performed, a corresponding screened room area (6) is at least partially screened from the contained room area (5) through the use of a turntable in accordance with Claims 1 to 13, which is **characterised by the fact** that as regards the turntable there is an essentially fixed screen section (7) and a screen section (8), which essentially revolves with the turntable, and that, by turning this to a screen rotational position, it results in a screening by means of the relative position of both screen sections to each other. A transition area (9) between the screen sections is formed, which is closed tight seamlessly in regard to the requirements of the type of contained work for sealed integrity.

## Revendications

1. Table rotative (1) avec au moins deux secteurs de travail (2, 3), au moins un des secteurs de travail (2, 3) devant être à cette occasion tourné, en une position de rotation de la table rotative (1), vers une zone spatiale à délimiter (5) pour un travail à délimiter et, au moyen d'une rotation de la table de rotation (1) en une autre position de rotation, vers une zone spatiale à protéger (6) pour un travail à protéger ; et, au moins pendant l'exécution du travail à délimiter, la zone spatiale à protéger (6) devant à cette occasion être au moins partiellement protégée de la zone de travail à délimiter (5) ; un partenaire de protection (7) essentiellement fixe par rapport à la table rotative (1) et un partenaire de protection (8) tournant essentiellement en même temps que la table rotative (1) étant prévus à cette occasion, la protection résultant de la position relative des deux partenaires de protection (7, 8) l'un par rapport à l'autre en une position de rotation protectrice et une zone de transition (9) entre les partenaires de protection (7, 8) étant essentiellement complètement hermétique pour ce qui est des exigences d'étanchement du type de travail à délimiter: **caractérisée en ce que** le partenaire de protection tournant (8) est d'une épaisseur plus fine dans la zone (18) de l'axe de rotation (11) que dans les zones de bordure (19), et **en ce que** l'épaisseur augmente de manière continue en direction du bord, un amarrage bilatéral du partenaire de protection tournant au partenaire de protection fixe pouvant être à cette occasion assuré par une rotation de 175 à 178,5° du partenaire de protection tournant.

2. Table rotative conforme à la revendication 1, **caractérisée en ce que** le partenaire de protection fixe (7) est formé au moins partiellement par des zones murales environnantes (17), en particulier en forme de cabine.

3. Table rotative conforme à l'une des revendications 1 ou 2, **caractérisée en ce que** le partenaire, de protection fixe (7) en position de protection est essentiellement une zone de protection entourant le partenaire de protection tournant (8).

4. Table rotative conforme à l'une des revendications 1 à 3, **caractérisée en ce que** le partenaire de protection tournant (8) est une paroi de séparation essentiellement continue et fixée sur une plaque rotative (4) entre les deux zones spatiales (5, 6).

5. Table rotative conforme aux revendications 1 à 4, **caractérisée en ce qu**'un partenaire de protection (7, 8) est construit en une pièce ou en plusieurs pièces.

6. Table rotative conforme à l'une des revendications 1 à 5, **caractérisée en ce que** le partenaire de protection tournant (8) est au moins partiellement plus haut que les dispositifs de travail (10) prévus sur la plaque rotative (4) dans les secteurs de travail (2, 3).

7. Table rotative conforme à l'une des revendications 1 à 6, **caractérisée en ce qu**'un axe de rotation (11) du partenaire de protection tournant (8) correspond à un centre de rotation de la plaque rotative (4).

8. Table rotative conforme à l'une des revendications 1 à 7, **caractérisée en ce que** l'axe de rotation (11) est entouré d'un cylindre rotatif protégé (12) qui est monté sur la table rotative (4) et sur lequel est fixé le partenaire de protection tournant (8).

9. Table rotative conforme à l'une des revendications 1 à 8, **caractérisée en ce que** la zone de transition (9) est un joint de séparation et/ou **en ce qu'**il existe au moins partiellement un contact direct entre les partenaires de protection (7, 8).

10. Table rotative conforme à l'une des revendications 1 à 9, **caractérisée en ce qu**'un partenaire de protection présente un joint d'étanchement (13) longeant essentiellement les zones ayant une proximité correspondante avec l'autre partenaire de protection, ce joint devant être introduit dans la zone de transition correspondante (9) vers l'autre partenaire de protection de manière complètement hermétique par la rotation de la table rotative (1).

11. Table rotative conforme à la revendication 10, **caractérisée en ce que** le joint d'étanchement (13) est cunéiforme par rapport à la direction de rotation (22), ceci signifiant qu'il s'étend de manière cunéiforme vers un centre de rotation de la table rotative.

12. Table rotative conforme à l'une des revendications 10 ou 11, **caractérisée en ce que** le joint d'étanchement (13) est cunéiforme par rapport à une direction de rotation en sens avant et en sens arrière, ceci signifiant qu'il s'étend de manière cunéiforme vers un centre de rotation de la table rotative, et **en ce qu'**il constitue un étanchement dans les deux directions de rotation (22).

13. Table rotative conforme à l'une des revendications 1 à 12, **caractérisée en ce que** dans la zone spatiale à protéger (6), dans un secteur de travail de la table rotative (1), un dispositif de préférence automatisé de traitement laser - en particulier de soudage à laser - est prévu et est protégé, par rapport à la zone spatiale à délimiter (7), par les partenaires de protection en position de protection.

14. Procédé de mise en place de positions de travail protégées, une table rotative avec au moins deux secteurs de travail (2, 3) étant à cette occasion amenée d'une position de travail vers une autre position de travail, une zone spatiale à protéger correspondante (6) étant à cette occasion au moins partiellement protégée d'une zone spatiale à délimiter (5) - et ce au moins pendant l'exécution d'un travail à délimiter -, en utilisant une table rotative conforme aux revendications 1 à 13, **caractérisé en ce qu**'un partenaire de protection (7) essentiellement fixe par rapport à la table rotative et un partenaire de protection (8) tournant essentiellement en même temps que la table rotative sont amenés, de par la rotation, en une position de rotation protectrice en résultant grâce à la position relative des deux partenaires de protection l'un par rapport à l'autre, ce par quoi une zone de transition (9) entre les partenaires de protection est essentiellement rendue complètement étanche pour ce qui est des exigences d'étanchement du type de travail à délimiter.
